# EUROPEAN PATENT SPECIFICATION

(11) **EP 4 678 706 B1**
(45) Date of publication and mention of the grant of the patent: **11.11.2026**
(21) Application number: 25170587.7
(22) Date of filing: 15.04.2025
(51) Int. Cl.: C09D 183/04, G03G 15/20

(54) **METHOD OF MANUFACTURING ELECTROPHOTOGRAPHIC MEMBER**
VERFAHREN ZUR HERSTELLUNG EINES ELEKTROPHOTOGRAPHISCHEN ELEMENTS
PROCÉDÉ DE FABRICATION D'UN ÉLÉMENT ÉLECTROPHOTOGRAPHIQUE

(30) Priority: 12.07.2024 JP 2024112913; 24.01.2025 JP 2025010978
(43) Date of publication of application: 14.01.2026
(73) Proprietor: FUJIFILM Business Innovation Corp., Minato-ku Tokyo (JP)
(72) Inventor: INAGAKI, Tomotake, Ebina-shi, Kanagawa (JP); KUBOTA, Ryosuke, Ebina-shi, Kanagawa (JP); NISHIMURA, Iori, Ebina-shi, Kanagawa (JP); KINUTA, Yasuhiko, Ebina-shi, Kanagawa (JP); KIMURA, Jun, Ebina-shi, Kanagawa (JP); MATSUMOTO, Koichi, Ebina-shi, Kanagawa (JP); SEKO, Masayuki, Ebina-shi, Kanagawa (JP)
(74) Representative: Becker Kurig & Partner Patentanwälte mbB

(56) References cited:
- JP-B2- 6 635 768

## Description

### BACKGROUND OF THE INVENTION

### (i) Field of the Invention

The present invention relates to a method of manufacturing an electrophotographic member.

### (ii) Description of Related Art

In an image forming apparatus (such as a copy machine, a facsimile machine, or a printer) using an electrophotographic method, a toner image formed on the surface of an image holder is transferred to the surface of a recording medium and fixed on the recording medium such that an image is formed.

As a material for a surface layer of a fixing member having releasability at a high temperature, a tetrafluoroethylene·perfluoroalkyl vinyl ether copolymer (PFA) which is a fluorine material is widely used (for example, see JP2021-165773A).
JP 6 635768 B2 discloses an image forming apparatus including a fixing device that heats and fixes the toner image formed on the recording medium by the image forming process means as a permanent image on the recording medium. The fixing device employs a heating and pressing method and includes a fixing member and a pressing member. By transporting a recording medium having an unfixed image such as a toner image between the two members, the unfixed image is heated and pressed, and a permanent fixed image can be obtained.

### SUMMARY OF THE INVENTION

An object of the present invention is to provide a method of manufacturing an electrophotographic member according to the appended claims. The method is capable of suppressing peeling of a surface layer as compared with a case of a method of manufacturing an electrophotographic member including a step of forming a surface layer containing a polysiloxane compound having a T unit represented by Formula: [R¹SiO_{3/2}]ₘ on a surface layer forming surface of an underlayer, in which before forming the surface layer, a surface treatment is not performed on the surface layer forming surface of the underlayer or a surface treatment is performed to set the surface free energy to less than 30 mJ/m² or more than 120 mJ/m².

### BRIEF DESCRIPTION OF THE DRAWINGS

Exemplary embodiment(s) of the present invention will be described in detail based on the following figures, wherein:

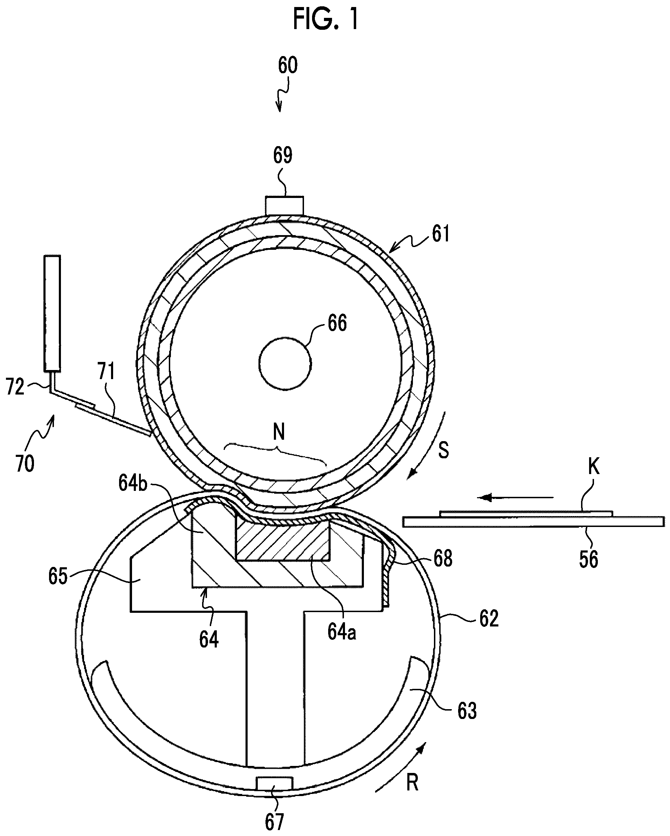

Fig. 1 is a schematic configuration view showing an example of a first exemplary embodiment of a fixing device of the present exemplary embodiment;

According to <1>, a method of manufacturing an electrophotographic member capable of suppressing peeling of the surface layer is provided as compared with a case of a method of manufacturing an electrophotographic member including forming a surface layer containing a polysiloxane compound having a T unit represented by Formula: [R¹SiO_{3/2}]ₘ on a surface layer forming surface of an underlayer, in which before forming the surface layer, a surface treatment is not performed on the surface layer forming surface of the underlayer or a surface treatment is performed to set the surface free energy to less than 30 mJ/m² or more than 120 mJ/m².

According to <2>, the method of manufacturing an electrophotographic member in which peeling of a surface layer capable of suppressing, compared to a case where the polysiloxane compound has only a T unit represented by Formula: [R¹SiO_{3/2}]ₘ is provided.

According to <3>, the method of manufacturing an electrophotographic member capable of suppressing peeling of the surface layer is provided as compared with a case where the surface free energy of the surface layer forming surface of the underlayer is less than 40 mJ/m² or more than 100 mJ/m².

According to <4>, the method of manufacturing an electrophotographic member capable of suppressing peeling of the surface layer is provided as compared with a case where the difference between the surface free energy of the surface layer forming surface of the underlayer and the surface free energy of the surface of the surface layer is less than 10 mJ/m² or more than 70 mJ/m² in absolute value.

According to <5>, <6>, or <7>, the method of manufacturing an electrophotographic member capable of easily suppressing peeling of the surface layer by an ultraviolet irradiation treatment or a plasma treatment is provided as compared with a case of a method of manufacturing an electrophotographic member including forming a surface layer containing a polysiloxane compound having a T unit represented by Formula: [R¹SiO_{3/2}]ₘ on a surface layer forming surface of an underlayer, in which before forming the surface layer, a surface treatment is not performed on the surface layer forming surface of the underlayer, or a surface treatment is performed to set the surface free energy to less than 40 mJ/m² or more than 100 mJ/m².

### BRIEF DESCRIPTION OF THE DRAWINGS

Exemplary embodiment(s) of the present invention will be described in detail based on the following figures, wherein:
Fig. 1 is a schematic configuration view showing an example of a first exemplary embodiment of a fixing device of the present exemplary embodiment;
Fig. 2 is a schematic configuration view showing an example of a second exemplary embodiment of the fixing device according to the present exemplary embodiment;
Fig. 3 is a schematic configuration view showing an example of a third exemplary embodiment of the fixing device according to the present exemplary embodiment; and
Fig. 4 is a schematic configuration view showing an example of an image forming apparatus according to the present exemplary embodiment.

### DETAILED DESCRIPTION OF THE INVENTION

Hereinafter, exemplary embodiments of the present invention will be described. The following descriptions and examples merely illustrate the exemplary embodiments, and do not limit the scope of the present invention.

In the present specification, a numerical range shown using "to" indicates a range including numerical values described before and after "to" as a minimum value and a maximum value.

Regarding the ranges of numerical values described in stages in the present exemplary embodiment, the upper limit value or lower limit value described in one range of numerical values may be replaced with the upper limit value or lower limit value of another range of numerical values described in stages. In addition, regarding the ranges of numerical values described in the present exemplary embodiment, the upper limit value or lower limit value of a range of numerical values may be replaced with values described in examples.

In the present specification, the term "step" includes not only an independent step but a step that is not clearly distinguished from other steps as long as the intended purpose of the step is achieved.

In the present specification, in a case where an exemplary embodiment is described with reference to drawings, the configuration of the exemplary embodiment is not limited to the configuration shown in the drawings. In addition, the sizes of members in each drawing are conceptual and a relative relationship between the sizes of the members is not limited thereto.

In the present specification, each component may contain a plurality of corresponding substances. In a case where the amount of each component in a composition is mentioned in the present exemplary embodiment, and there are a plurality of substances corresponding to each component in the composition, unless otherwise specified, the amount of each component means the total amount of the plurality of substances present in the composition.

### <Electrophotographic Member>

An electrophotographic member according to the present exemplary embodiment includes an underlayer, and a surface layer that is provided in contact with the underlayer and contains a polysiloxane compound having a T unit represented by Formula: [R¹SiO_{3/2}]ₘ (here, in the formula, R¹ represents an organic group, m represents an integer of 2 or more, and at least one R¹ among a plurality of R¹'s present in the T unit is a group including at least one of an alkyl group or an aryl group).

In addition, the adhesive strength between the surface layer and the underlayer is 0.5 N/mm or more.

Here, in recent years, due to the increased awareness of sustainable development goals (SDGs), the developments of materials with reduced environmental burden have been promoted. As one of the developments, there is a technique of blending a polysiloxane compound as a mold release agent into a surface layer of an electrophotographic member.

However, particularly in a case where a surface layer containing a polysiloxane compound having a T unit represented by the above formula is laminated on an underlayer (a rubber layer, a resin layer, or the like) as a mold release agent, the adhesiveness between the surface layer and the underlayer is lowered, and the surface layer is peeled off in a case of being used in an electrophotographic apparatus.

On the other hand, in the electrophotographic member according to the present exemplary embodiment, the adhesive strength between the surface layer and the underlayer is set to 0.5 N/mm or more.

Therefore, the electrophotographic member according to the present exemplary embodiment is a member in which the peeling of the surface layer is suppressed.

Hereinafter, the details of the electrophotographic member according to the present exemplary embodiment will be described.

### (Configuration of Electrophotographic Member)

The electrophotographic member according to the present exemplary embodiment includes an underlayer and a surface layer provided in contact with the underlayer. The underlayer may be, for example, an elastic layer, a resin substrate layer, or the like, depending on the use of the electrophotographic member.

Specific configurations of the electrophotographic member according to the present exemplary embodiment include
(1) a configuration in which a substrate, an elastic layer as an underlayer, and a surface layer are provided in this order,
(2) a configuration in which a resin substrate as an underlayer and a surface layer are provided in this order,
and the like.

### (Adhesive Strength Between Surface Layer and Underlayer)

The adhesive strength between the surface layer and the underlayer is 0.5 N/mm or more, and for example, preferably 0.6 N/mm or more, more preferably 0.7 N/mm or more, and still more preferably 1.0 N/mm. The upper limit of the adhesive strength between the surface layer and the underlayer is, for example, 5 N/mm or less due to the constraints of the manufacturing method.

In a case where the adhesive strength between the surface layer and the underlayer is less than 0.5 N/mm, the surface layer is easily peeled off.

The adhesive strength between the surface layer and the underlayer is measured as follows.

The electrophotographic member to be measured is cut to obtain a strip sample having a width of 10 mm. A cut is made only in the surface layer of the obtained strip sample to form a gripping margin. The surface layer is pulled at a rate of 10 mm/min using a tensile tester, and the adhesive strength is measured.

### (Waviness of Surface Layer)

A maximum cross-sectional height Wt of the waviness profile of the surface layer is, for example, preferably 1 µm or less and more preferably 0.8 µm or less.

In a case where the maximum cross-sectional height Wt of the waviness profile is 1 µm or less, the waviness of the surface of the surface layer is low, the flatness of the surface layer is increased, and the function as an electrophotographic member, such as gloss uniformity of output images, is improved.

The maximum cross-sectional height Wt of the waviness profile of the surface layer is measured by a surface roughness measuring instrument under conditions of a cut-off value of 0.8 mm and an evaluation length of 10 mm in accordance with JIS B0601: 2013 (ISO 4287: 1997).

### (Surface Free Energy)

The surface free energy of the surface layer forming surface of the underlayer is, for example, preferably 30 mJ/m² to 120 mJ/m², more preferably 40 mJ/m² to 100 mJ/m², and still more preferably 45 mJ/m² to 100 mJ/m².

In a case where the surface free energy of the surface layer forming surface of the underlayer is within the above-described range, the adhesive strength between the surface layer and the underlayer is easily controlled within the above-described range.

As will be described later, examples of the method of setting the surface free energy of the surface layer forming surface of the underlayer within the above-described range include a method of performing a surface treatment such as an ultraviolet irradiation treatment or a plasma treatment on the surface layer forming surface of the underlayer.

A difference between the surface free energy of the surface layer forming surface of the underlayer and the surface free energy of the surface of the surface layer is preferably, for example, 5 mJ/m² or more and 70 mJ/m² or less, more preferably 10 mJ/m² or more and 70 mJ/m² or less, and still more preferably 13 mJ/m² or more and 60 mJ/m² or less, in absolute value.

In a case where the difference between the surface free energy of the surface layer forming surface of the underlayer and the surface free energy of the surface of the surface layer is within the above-described range, the maximum cross-sectional height Wt of the waviness profile of the surface layer is easily controlled within the above-described range.

It is presumed that when the surface layer is formed, the affinity between the surface layer forming surface of the underlayer and the surface layer forming composition is increased, and the waviness of the surface of the surface layer is reduced.

The surface free energy of the surface layer forming surface of the underlayer and the surface of the surface layer is measured as follows.

Based on the Owens-Wendt-Rabel-Kaelble (OWRK) method, water, diiodomethane, and N-dodecane, which have known surface free energies, are used, water is added dropwise to a measurement target surface to measure a contact angle of water, diiodomethane is added dropwise to a film to measure a contact angle of diiodomethane, N-dodecane is added dropwise to a film to measure a contact angle of N-dodecane, and the free energy (mJ/m²) is calculated.

However, each contact angle is a value measured after 5 seconds have elapsed from the dropwise addition of water, diiodomethane, or N-dodecane to the film.

Here, regarding the surface free energy of the surface layer forming surface of the underlayer, the surface free energy is measured immediately before the surface layer is formed or after the surface layer is peeled off to expose the underlayer surface.

### (Substrate)

In a case where the electrophotographic member is a roll member, examples of the substrate include a cylinder formed of a metal (aluminum, SUS, iron, copper, or the like), an alloy, ceramics, a fiber reinforced metal (FRM), or the like.

In a case where the electrophotographic member is an endless belt, a resin substrate described later is applied as the substrate.

### (Underlayer)

Examples of the elastic material contained an elastic layer as an underlayer include acrylic rubber, isoprene rubber, chloroprene rubber, epichlorohydrin rubber, butyl rubber, polyurethane rubber, silicone rubber, fluororubber, styrene-butadiene rubber, butadiene rubber, nitrile rubber, ethylene propylene rubber, and epichlorohydrin-ethylene oxide copolymerization rubber, epichlorohydrin-ethylene oxide-allylglycidyl ether ternary copolymerization rubber, ethylene-propylene-diene ternary copolymerization rubber (EPDM), acrylonitrile-butadiene copolymerization rubber (NBR), natural rubber, rubber as a mixture of these, and the like.

Examples of the elastic material contained in the rubber layer as the underlayer include silicone rubber, fluororubber, and fluorosilicone rubber.

The elastic layer as the underlayer may be a foamed layer or a non-foamed layer.

Examples of the resin material contained in the resin substrate as an underlayer include a polyamide resin, a polyimide resin, a polyamide-imide resin, a polyetherimide resin, a polyether ether ketone resin, a polyether ether ester resin, a polyphenylene sulfide resin, a polyethersulfone resin, a polyphenyl sulfone resin, a polysulfone resin, a polyethylene terephthalate resin, a polybutylene terephthalate resin, a polyacetal resin, a polycarbonate resin, a polyester resin, a silicone resin, and a mixed resin thereof.

### (Surface Layer)

The surface layer contains a polysiloxane compound. Specifically, for example, the surface layer may be a surface layer containing a polysiloxane compound as a main component (for example, a matrix material serving as a binding material), or may be a surface layer containing a binder resin and a polysiloxane compound. The surface layer may contain other additives.

Here, the surface layer containing the polysiloxane compound as a main component (for example, a matrix material serving as a binding material) refers to a layer containing only the polysiloxane compound or a layer containing the largest amount of polysiloxane compound.

### -Polysiloxane Compound-

The polysiloxane compound is a polysiloxane compound having a T unit represented by Formula: [R¹SiO_{3/2}]ₘ (here, in the formula, R¹ represents an organic group, m represents an integer of 2 or more, and at least one R¹ among a plurality of R¹'s present in the T unit is a group including at least one of an alkyl group or an aryl group).

The polysiloxane compound is, for example, preferably a polysiloxane compound having a D unit represented by Formula: [R²R³SiO_{2/2}]ₙ (here, in the formula, R² and R³ represent an organic group, and n represents an integer of 2 or more) together with a T unit represented by Formula: [R¹SiO_{3/2}]ₘ.

From the viewpoint of improving releasability of the surface layer, it is preferable that at least one of R² or R³ among a plurality of R²'s and R³'s in the D unit is, for example, a group including at least one of an alkyl group or an aryl group.

In a case where the polysiloxane compound having a T unit and a D unit is applied, flexibility is imparted to the surface layer, and peeling of the surface layer is easily suppressed.

In the T unit and the D unit, the organic group of R¹, R², and R³ in the formulae represents, for example, a hydroxyl group, a siloxy group, a hydrocarbon group, a hydrocarbon group in which one or a plurality of methylene groups are replaced with a carbonyl group, a hydrocarbon group in which one or a plurality of carbon atoms are replaced with a heteroatom (an oxygen atom, a nitrogen atom, or a sulfur atom), or a group obtained by combining these.

Examples of the siloxy group described as the organic group represented by R¹, R², and R³ include a monoalkylsiloxy group, a dialkylsiloxy group, a trialkylsiloxy group, and the like, and for examples, a dialkylsiloxy group or a trialkylsiloxy group is preferable and a trialkylsiloxy group is more preferable.

Examples of the hydrocarbon group described as the organic group represented by R¹, R², and R³ include an aliphatic hydrocarbon group and an aromatic hydrocarbon group.

Examples of the aliphatic hydrocarbon group include a linear, branched, or alicyclic saturated aliphatic hydrocarbon group, and a linear, branched, or alicyclic unsaturated aliphatic hydrocarbon group.

The aliphatic hydrocarbon group is, for example, preferably a hydrocarbon group having 1 or more and 20 or less carbon atoms, and more preferably a hydrocarbon group having 1 or more and 15 or less carbon atoms.

The aliphatic hydrocarbon group may be substituted with a substituent such as a halogen atom, a hydroxyl group, an amino group, and an aryl group.

Examples of the aromatic hydrocarbon group include a hydrocarbon group having 6 or more and 18 or less carbon atoms (for example, preferably 6 or more and 14 or less carbon atoms). Examples of the aromatic hydrocarbon group include a phenyl group, a naphthyl group, an anthracenyl group, and the like.

The aromatic hydrocarbon group may be substituted with a substituent such as a halogen atom, a hydroxyl group, an amino group, an alkyl group, and an alkoxy group.

The organic group represented by R¹, R², and R³ may have a reactive group. Examples of the reactive group include a vinyl group, an allyl group, a styryl group, a maleimide group, an epoxy group, an oxetanyl group, a (meth)acryloyl group, and the like. That is, the siloxane compound may be a cured product in which the above-described reactive group is reacted.

A plurality of R¹'s, R²'s, and R³'s present in the T unit and the D unit may each be the same organic group or different organic groups.

However, at least one R¹ among the plurality of R¹'s present in the T unit is a group including at least one of an alkyl group or an aryl group.

In addition, at least one R² or R³ among the plurality of R²'s and R³'s present in the D unit is, for example, preferably a group including at least one of an alkyl group or an aryl group. That is, at least one R² among a plurality of R²'s present in the D unit is preferably, for example, a group including at least one of an alkyl group or an aryl group. At least one R³ among a plurality of R³'s present in the D unit is preferably, for example, a group including at least one of an alkyl group or an aryl group.

Here, from the viewpoint of improving the releasability of the surface layer, the group including an alkyl group is, for example, preferably an alkyl group itself or a siloxy group including an alkyl group. That is, at least one of the plurality of R¹, R², or R³ present in the T unit and the D unit is preferably, for example, an alkyl group or a siloxy group including an alkyl group.

From the viewpoint of improving the releasability of the surface layer, the alkyl group is, for example, preferably an alkyl group having 1 or more to 6 or less carbon atoms and more preferably an alkyl group having 1 or more to 4 or less carbon atoms or an alkyl group having 1 carbon atom (that is, a methyl group).

As the group including an aryl group, for example, an aryl group itself or an aralkyl group is preferable.

Examples of the aryl group include a phenyl group and a naphthyl group.

Examples of the alkyl group in the aralkyl group include a linear or branched alkyl group having 1 or more and 4 or less carbon atoms. Examples of the aryl group in the aralkyl group include a phenyl group and a naphthyl group. Examples of the aralkyl group include a benzyl group, a 1-phenylethyl group, a 2-phenylethyl group, and a 2-methyl-2-phenylethyl group.

From the viewpoint of improving the releasability of the surface layer, the group including an aryl group is, for example, preferably a phenyl group.

From the viewpoint of improving releasability of the surface layer, the presence proportion of the group including at least one of an alkyl group or an aryl group is, for example, preferably high with respect to the polysiloxane compound.

In the T unit and the D unit, m and n in the formula represent an integer of 2 or more, and from the viewpoint of improving the releasability of the surface layer, for example, preferably represents an integer of 8 or more and more preferably represents an integer of 8 or more and 10,000 or less.

In the T unit and the D unit, the lower limit of the ratio m/n of m to n in the formula is, for example, preferably 100/0 or more and more preferably 100/1 or more. In addition, the upper limit of m/n is, for example, preferably 10/90 or less, more preferably 20/80 or less, and still more preferably 25/75 or less.

In a case where the ratio m/n is within the above-described range, the peeling of the surface layer is suppressed, and both the releasability of the surface layer and the peeling resistance can be achieved.

The ratio m/n, that is, the ratio of m in the T unit to n in the D unit is measured as follows. The ratio m/n is calculated based on the peak ratio of the D unit (high ppm side) and the T unit (low ppm side) by solid²⁹Si NMR.

From the viewpoint of improving the releasability of the surface layer, the content of the polysiloxane compound is, for example, preferably 10% by volume or more, more preferably 30% by volume or more, and still more preferably 50% by volume or more with respect to the surface layer.

The polysiloxane compound may be in the form of particles. The volume average particle diameter of the particulate polysiloxane compound is, for example, preferably 0.01 µm or more and 10 µm or less, more preferably 0.01 µm or more and 5 µm or less, and still more preferably 0.01 µm or more and 2.5 µm or less. In particular, the volume average particle diameter of the particulate polysiloxane compound is, for example, preferably 2.5 µm or less and more preferably 1 µm or less.

In a case where the volume average particle diameter of the particulate polysiloxane compound is within the above-described range, the releasability of the surface layer is easily improved.

Examples of the polysiloxane compound include a polymer compound called silsesquioxane (SQ) having various skeleton structures.

The polysiloxane compound may have, as a skeleton structure, any of a cage-type structure (a perfect cage-type structure or a cage-type structure), a ladder-type structure, or a random structure.

The volume average particle diameter of the particulate polysiloxane compound is measured as follows.

A sample is collected from the surface layer of the electrophotographic member. The sample is a sample having a cut surface along the thickness direction of the surface layer as an observation surface.

The observation surface of the sample is observed with a scanning electron microscope to capture an image. In the image, the area of each primary particle of the polysiloxane compound is measured by image analysis, and an equivalent circle diameter thereof is calculated from this area value. The calculation of the equivalent circle diameter is carried out for 100 particles of the polysiloxane compound. Then, a 50% diameter (D50v) in the volume-based cumulative frequency of the obtained equivalent circle diameter is defined as the volume average particle diameter of the polysiloxane compound.

### -Binder Resin-

In order to fix the polysiloxane compound to the surface layer, a binder resin may be used. Examples of the binder resin include a silicone resin, a polyimide resin (PI resin), a polyamide-imide resin (PAI resin), a polyether ketone resin (for example, an aromatic polyether ether ketone resin or the like), a polyphenylene sulfide resin (PPS resin), a polyetherimide resin (PEI resin), a polyester resin, a polystyrene resin, a polyamide resin, a polycarbonate resin, a polyethylene terephthalate resin (PET resin), and a mixed resin thereof.

As the binder resin, chloroprene rubber, epichlorohydrin rubber, isoprene rubber, butyl rubber, polyurethane, silicone rubber, fluororubber, styrene-butadiene rubber, butadiene rubber, nitrile rubber (NBR), ethylene propylene rubber, ethylene-propylene-diene ternary copolymer rubber (EPDM), natural rubber, or mixed rubber thereof can be also given as an example.

From the viewpoint of improving the releasability of the surface layer, for example, a silicone resin is suitable as the binder resin. Examples of the silicone resin include a pure silicone resin, a silicone alkyd resin, a silicone epoxy resin, a silicone polyester resin, a silicone acrylic resin, a silicone phenol resin, a silicone urethane resin, and a silicone melamine resin.

In addition, for example, it is preferable that the surface layer of the electrophotographic member according to the present exemplary embodiment does not contain a fluorine atom. That is, for example, it is preferable that the surface layer does not contain a compound having a fluorine atom. Specifically, for example, as the binder resin, a resin not containing a fluorine atom (specifically, a resin other than the fluororesin) is preferably applied.

The content of the binder resin is, for example, preferably 80% by mass or less, more preferably 70% by mass or less, and still more preferably 60% by mass or less with respect to the surface layer.

### -Other Additives-

As the other additives, additives can be appropriately selected from known additives such as a conductive agent, a reinforcing agent, an antioxidant, a surfactant, and a heat aging inhibitor depending on the various uses of the electrophotographic member. The content of the additives with respect to the surface layer is, for example, preferably 30% by mass or less, more preferably 20% by mass or less, and still more preferably 10% by mass or less.

### (Use)

Examples of the use of the electrophotographic member according to the present exemplary embodiment include a fixing member (a heating member, a pressure member, and the like), a transfer member (an intermediate transfer member, a primary transfer member, a secondary transfer member, or the like), a charging member (a charging roll or the like), and a transport member (a transport roll, a transport belt, or the like).

### <Method of Manufacturing Electrophotographic Member>

A method of manufacturing an electrophotographic member according to the present exemplary embodiment includes
performing a surface treatment on a surface layer forming surface of an underlayer to set a surface free energy of the surface layer forming surface of the underlayer to 30 mJ/m² or more and 120 mJ/m² or less (particularly, for example, 40 mJ/m² or more and 100 mJ/m² or less), and
forming a surface layer containing a polysiloxane compound having a T unit represented by Formula: [R¹SiO_{3/2}]ₘ (here, in the formula, R¹ represents an organic group, m represents an integer of 2 or more, and at least one R¹ among a plurality of R¹'s present in the T unit is a group including at least one of an alkyl group or an aryl group) on the surface layer forming surface of the underlayer.

In the method of manufacturing an electrophotographic member according to the present exemplary embodiment, an electrophotographic member capable of suppressing peeling of the surface layer is obtained by the above-described method.

### (First Step)

In the first step, a surface treatment is performed on the surface layer forming surface of the underlayer, and the surface free energy of the surface layer forming surface of the underlayer is set to 30 mJ/m² or more and 120 mJ/m² or less (for example, preferably 40 mJ/m² or more and 100 mJ/m² or less). Examples of the surface treatment include an ultraviolet irradiation treatment and a plasma treatment.

The conditions of the ultraviolet irradiation treatment may be such that the surface free energy of the surface layer forming surface of the underlayer is within the above-described range, and for example, the following conditions can be exemplified. In particular, for example, in a case where the wavelength of the ultraviolet light to be applied is a wavelength of 300 nm or less, the number of functional groups such as a hydroxyl group, a carbonyl group, and a carboxyl group can be increased on the surface of the underlayer, and the surface free energy of the surface layer forming surface of the underlayer is be easily controlled within the above-described range, which is suitable.

### -Conditions for Ultraviolet Irradiation Treatment-

· Light source: light source of ultraviolet light with a wavelength of 300 nm or less (mercury lamp, light emitting diode (LED) lamp, or the like)
· Irradiation intensity: 1 mW/cm² or more and 500 mW/cm² or less
· Irradiation time: 5 seconds or more and 3,000 seconds or less.

For example, regarding to the surface free energy, it is preferable to set the irradiation intensity to 5 mW/cm² or more and the irradiation time to 50 seconds or more, and it is more preferable to set the irradiation intensity to 10 mW/cm² or more and the irradiation time to 100 seconds or more.

The conditions for the plasma treatment may be such that the surface free energy of the surface layer forming the surface of the underlayer is within the above-described range, and for example, the following conditions can be exemplified.

### -Conditions for Plasma Treatment-

· Atmosphere gas: nitrogen, argon, helium, air
· Gas flow rate: 0 L/min or more and 500 L/min or less
· Gas pressure: 0.001 MPa or more and 1.5 MPa or less
· RF power: 0.1 kW or more and 10 kW or less
· Treatment time: 1 second or more and 600 seconds or less

In particular, in order to set the surface free energy to 40 mJ/m² or more and 100 mJ/m² or less, for example, it is preferable to set the irradiation time to 10 seconds or more.

The method of measuring the surface free energy of the surface layer forming surface of the underlayer is as described above.

### (Second Step)

In the second step, a surface layer containing a polysiloxane compound having a T unit represented by Formula: [R¹SiO_{3/2}]ₘ (here, in the formula, R¹ represents an organic group, m represents an integer of 2 or more, and at least one R¹ among a plurality of R¹'s present in the T unit is a group including at least one of an alkyl group or an aryl group) is formed on a surface layer forming surface in the underlayer.

In the second step, for example, a coating liquid containing a binder resin or a precursor thereof, a polysiloxane compound, and a solvent that dissolves or disperses the binder resin or the precursor thereof and the polysiloxane compound is applied onto the underlayer and heated to form a surface layer.

In a case where the polysiloxane compound is a liquid or oily compound, a coating liquid including the polysiloxane compound and, as necessary, a solvent that dissolves or disperses the polysiloxane compound can be applied onto the underlayer and heated to form a surface layer.

In addition, depending on the kind of the polysiloxane compound, the surface layer can be formed by applying the coating liquid and irradiating the coating liquid with ultraviolet light, in addition to the application of the coating liquid and heating.

Here, in a case where the binder resin is a polyimide resin, the precursor of the binder resin indicates a polyamic acid, and indicates a monomer which is a polymerization component of the binder resin, a component (a prepolymer and a curing agent for curing the prepolymer) for forming the binder resin, and the like.

In the method of manufacturing an electrophotographic member according to the present exemplary embodiment, the materials used for the underlayer and the surface layer and the like are the same as those for the electrophotographic member according to the present exemplary embodiment.

### <Fixing Device>

The fixing device according to the present exemplary embodiment includes a first rotary member and a second rotary member that is arranged in contact with an outer surface of the first rotary member, and at least one of the first rotary member or the second rotary member is a fixing member having the electrophotographic member according to the present exemplary embodiment.

As the electrophotographic member according to the present exemplary embodiment applied to the fixing member, for example, a member having a configuration in which a substrate, an elastic layer as an underlayer, and a surface layer are provided in this order can be applied. A metal layer (for example, a heat generating layer for electromagnetic induction heating) may be provided between the substrate and the underlayer.

Hereinafter, regarding the fixing device according to the present exemplary embodiment, a fixing device including a heating roll and a pressure belt will be described as a first exemplary embodiment, a fixing device including a heating belt and a pressure roll will be described as a second exemplary embodiment, and an electromagnetic induction heating-type fixing device including a heating belt and a heating roll will be described as a third exemplary embodiment.

The fixing device according to the present exemplary embodiment is not limited to the first to third exemplary embodiments, and may be a fixing device including a heating roll or a heating belt and a pressure belt.

Then, in the fixing device according to the present exemplary embodiment, the electrophotographic member according to the present exemplary embodiment may be applied to all of a heating roll, a heating belt, a pressure roll, or a pressure belt.

### (First Exemplary Embodiment of Fixing Device)

The first exemplary embodiment of the fixing device will be described with reference to Fig. 1. Fig. 1 is a schematic view showing an example (that is, a fixing device 60) of the first exemplary embodiment of the fixing device.

As shown in Fig. 1, the fixing device 60 is configured, for example, with a heating roll 61 (an example of the first rotary member) that is driven to rotate, a pressure belt 62 (an example of the second rotary member), and a pressing pad 64 (an example of a pressing member) that presses the heating roll 61 via the pressure belt 62.

Regarding the pressing pad 64, for example, the pressure belt 62 and the heating roll 61 may be relatively pressed. Therefore, the pressure belt 62 may be pressed against the heating roll 61, or the heating roll 61 may be pressed against the pressure belt 62.

A halogen lamp 66 (an example of a heating device) is arranged on the inside of the heating roll 61. The heating device is not limited to the halogen lamp, and other heating members that generate heat may be used.

Meanwhile, for example, a thermosensitive element 69 is arranged in contact with a surface of the heating roll 61. The lighting of the halogen lamp 66 is controlled based on the temperature measurement value by the thermosensitive element 69, and the surface temperature of the heating roll 61 is kept at a target set temperature (for example, 150°C).

The pressure belt 62 is rotatably supported by, for example, the pressing pad 64 arranged therein and a belt traveling guide 63. In a sandwiching region N (nip portion), the pressure belt is arranged to be pressed against the heating roll 61 by the pressing pad 64.

The pressing pad 64 is, for example, arranged in a state of being pressed against the heating roll 61 via the pressure belt 62 inside the pressure belt 62, and forms a sandwiching region N with the heating roll 61.

In the pressing pad 64, for example, a front sandwiching member 64a for securing a wide sandwiching region N is arranged on the inlet side of the sandwiching region N, and a peeling sandwiching member 64b for giving distortion to the heating roll 61 is arranged on the outlet side of the sandwiching region N.

In order to reduce sliding resistance between an inner peripheral surface of the pressure belt 62 and the pressing pad 64, for example, a sheet-like sliding member 68 is provided on a surface of the front sandwiching member 64a and the peeling sandwiching member 64b in contact with the pressure belt 62. The pressing pad 64 and the sliding member 68 are held by a metal holding member 65.

The sliding member 68 is provided, for example, so that a sliding surface thereof is in contact with the inner peripheral surface of the pressure belt 62, and is involved in holding and supplying an oil present between the sliding member 68 and the pressure belt 62.

For example, the belt traveling guide 63 is attached to the holding member 65, and the pressure belt 62 is configured to rotate.

A lubricant supply device 67, which is a device for supplying a lubricant (oil) to the inner peripheral surface of the pressure belt 62, is mounted on the belt traveling guide 63.

The heating roll 61 rotates, for example, in the direction of the arrow S by a drive motor (not shown), and following the above rotation, the pressure belt 62 rotates in the direction of the arrow R opposite to the rotation direction of the heating roll 61. That is, for example, the heating roll 61 rotates clockwise in Fig. 1, while the pressure belt 62 rotates counterclockwise.

Then, paper K (an example of a recording medium) having an unfixed toner image is guided by, for example, a fixing inlet guide 56 and transported to the sandwiching region N. While the paper K is passing through the sandwiching region N, the unfixed toner image on the paper K is fixed by the pressure and heat acting on the sandwiching region N.

In the fixing device 60, for example, by the front sandwiching member 64a in the form of a recess conforming to the outer peripheral surface of the heating roll 61, a wider sandwiching region N is secured, compared to a configuration having no front sandwiching member 64a.

In addition, the fixing device 60 is configured, for example, with the peeling sandwiching member 64b that is arranged to protruding from the outer peripheral surface of the heating roll 61, such that the heating roll 61 is locally distorted much in the outlet region of the sandwiching region N.

In a case where the peeling sandwiching member 64b is arranged as above, for example, the paper K after fixing passes through the distortion formed locally large in a case of passing through the peeling sandwiching region, and thus the paper K is easy to be peeled off from the heating roll 61.

As an auxiliary device for peeling, for example, a peeling member 70 is disposed on the downstream side of the sandwiching region N of the heating roll 61. The peeling member 70 is, for example, held by a holding member 72 in a state where a peeling claw 71 is close to the heating roll 61 in a direction facing the rotation direction of the heating roll 61 (counter direction).

### (Second Exemplary Embodiment of Fixing Device)

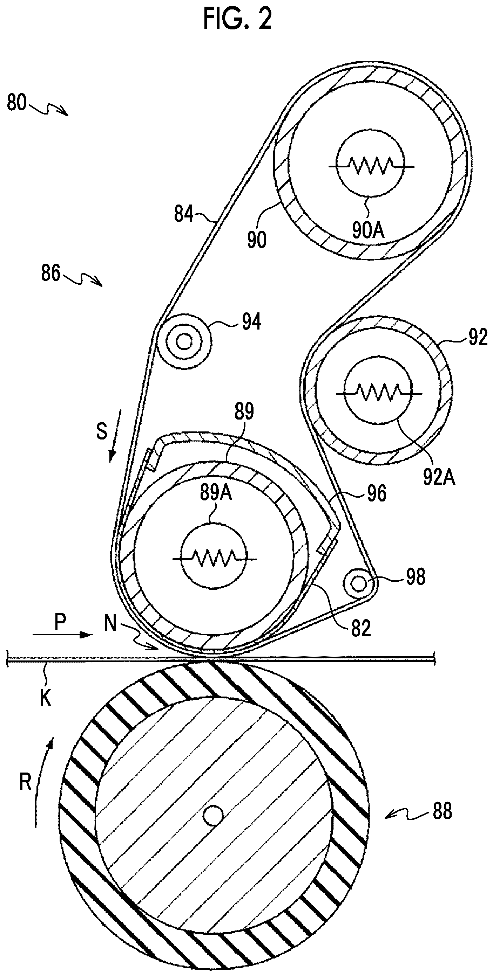

The second exemplary embodiment of the fixing device will be described with reference to Fig. 2. Fig. 2 is a schematic view showing an example (that is, a fixing device 80) of the second exemplary embodiment of the fixing device.

As shown in Fig. 2, the fixing device 80 is configured, for example, with a fixing belt module 86 including a heating belt 84 (an example of the first rotary member) and a pressure roll 88 (an example of the second rotary member) arranged in a state of being pressed on a heating belt 84 (fixing belt module 86). For example, a sandwiching region N (nip portion) is formed in a contact portion between the heating belt 84 (fixing belt module 86) and the pressure roll 88. In the sandwiching region N, the paper K (an example of the recording medium) is pressed and heated, and the toner image is fixed.

The fixing belt module 86 includes, for example, an endless heating belt 84, a heating and pressing roll 89 around which the heating belt 84 is wound on the side of the pressure roll 88 and which is driven to rotate by the rotational force of a motor (not shown) and presses the heating belt 84 from an inner peripheral surface thereof toward the pressure roll 88, and a support roll 90 which supports the heating belt 84 from the inside at a position different from the heating and pressing roll 89.

The fixing belt module 86 is provided with, for example, a support roll 92 which is arranged outside the heating belt 84 and defines a circulating path thereof, a posture correction roll 94 which corrects the posture of the heating belt 84 from the heating and pressing roll 89 to the support roll 90, and a support roll 98 which applies a tension to the heating belt 84 from the inner peripheral surface on the downstream side of the sandwiching region N which is a region formed by the heating belt 84 and the pressure roll 88.

The fixing belt module 86 is provided, for example, so that a sheet-like sliding member 82 is interposed between the heating belt 84 and the heating and pressing roll 89.

The sliding member 82 is provided, for example, so that a sliding surface thereof is in contact with an inner peripheral surface of the heating belt 84, and is involved in holding and supplying an oil present between the sliding member 82 and the heating belt 84.

Here, the sliding member 82 is provided, for example, in a state where both ends thereof are supported by a support member 96.

For example, a halogen heater 89A (an example of the heating device) is provided inside the heating and pressing roll 89.

The support roll 90 is, for example, a cylindrical roll made of aluminum, and a halogen heater 90A (an example of the heating device) is disposed therein, so that the heating belt 84 is heated from the inner peripheral surface side.

At both ends of the support roll 90, for example, spring members (not shown) pressing the heating belt 84 outward are disposed.

The support roll 92 is, for example, a cylindrical roll formed of aluminum, and a release layer formed of a resin having a thickness of 20 µm is formed on a surface of the support roll 92.

The release layer of the support roll 92 is formed, for example, to prevent a toner or paper dust from the outer peripheral surface of the heating belt 84 from accumulating on the support roll 92.

For example, a halogen heater 92A (an example of the heating device) is disposed inside the support roll 92 so that the heating belt 84 is heated from the outer peripheral surface side.

That is, for example, the heating and pressing roll 89, the support roll 90, and the support roll 92 are configured to heat the heating belt 84.

The posture correction roll 94 is, for example, a columnar roll made of aluminum, and an end position measurement mechanism (not shown) for measuring the end position of the heating belt 84 is arranged in the vicinity of the posture correction roll 94.

In the posture correction roll 94, for example, an axial displacement mechanism (not shown) which displaces a contact position of the heating belt 84 in an axial direction according to the measurement result of the end position measurement mechanism is disposed, and the posture correction roll 94 is configured to control meandering of the heating belt 84.

Meanwhile, the pressure roll 88 is, for example, rotatably supported, and the heating belt 84 is provided to be being pressed against a portion wound around the heating and pressing roll 89 by an urging device such as a spring (not shown). As a result, as the heating belt 84 (heating and pressing roll 89) of the fixing belt module 86 moves rotationally in the direction of the arrow S, the pressure roll 88 follows the heating belt 84 (heating and pressing roll 89) and moves rotationally in the direction of the arrow R.

The paper K having an unfixed toner image (not shown) is transported in the direction of an arrow P and is guided to the sandwiching region N of the fixing device 80. While the paper K is passing through the sandwiching region N, the unfixed toner image on the paper K is fixed by the pressure and heat acting on the sandwiching region N.

For the fixing device 80, an embodiment has been described in which a halogen heater (halogen lamp) is used as an example of a plurality of heating devices. However, the fixing device is not limited thereto, and a radiation lamp heating element (a heating element generating radiation (such as infrared rays)) and a resistance heating element (a heating element generating Joule heat by passing an electric current through a resistor: for example, a heating element obtained by forming a film with a resistor on a ceramic substrate and baking the resultant) other than the halogen heater may be used.

### (Third Exemplary Embodiment of Fixing Device)

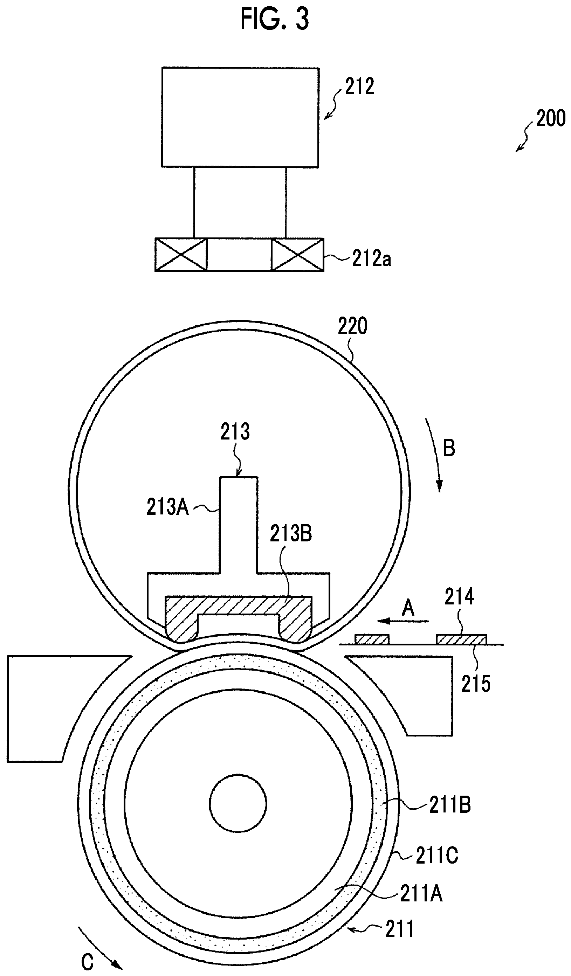

The third exemplary embodiment of the fixing device will be described with reference to Fig. 3. Fig. 3 is a schematic view showing an example (that is, a fixing device 200) of the third exemplary embodiment of the fixing device.

As shown in Fig. 3, the fixing device 200 is an electromagnetic induction heating-type fixing device including a belt 220 having a metal layer.

In the fixing device 200, a pressure roll (pressure member) 211 is arranged such that pressure is applied to a part of the belt 220. From the viewpoint of efficiently performing fixing, a contact region (nip) is formed between the belt 220 and the pressure roll 211, and the belt 220 is curved to conform to the peripheral surface of the pressure roll 211. In addition, from the viewpoint of ensuring the peelability of a recording medium, a bent portion where the belt is bent is formed at the end of the contact region (nip).

The pressure roll 211 is configured with an elastic layer 211B made of silicone rubber or the like that is formed on a substrate 211A, and a release layer 211C that is formed on the elastic layer 211B.

On the inside of the belt 220, an opposing member 213 is arranged at a position facing the pressure roll 211. The opposing member 213 consists of a metal, a heat-resistant resin, heat-resistant rubber, or the like, and has a pad 213B that is in contact with the inner peripheral surface of the belt 220 to locally increase pressure, and a support 213A that supports the pad 213B.

An electromagnetic induction heating device 212 having a built-in electromagnetic induction coil (excitation coil) 212a is provided at a position facing the pressure roll 211 (an example of the pressure member) across the belt 220. The electromagnetic induction heating device 212 applies an AC current to the electromagnetic induction coil, such that the generated magnetic field changes by an excitation circuit and an eddy current is generated in a metal layer (not shown in the drawing, for example, an electromagnetic induction metal layer) of the belt 220. The eddy current is converted into heat (Joule heat) by the electric resistance of the metal layer not shown in the drawing. As a result, the surface of the belt 220 generates heat.

The position of the electromagnetic induction heating device 212 is not limited to the position shown in Fig. 3. For example, the electromagnetic induction heating device 212 may be installed on the upstream side in the rotation direction B with respect to the contact region of the belt 220, or may be installed on the inside of the belt 220.

In the fixing device 200, by a driving device, a driving force is transmitted to the gear fixed to the end of the belt 220. As a result, the belt 220 performs self-rotation in the direction of the arrow B, and as the belt 220 rotates, the pressure roll 211 rotates in the opposite direction, that is, in the direction of the arrow C.

A recording medium 215 on which an unfixed toner image 214 is formed is passed through a contact region (nip) between the belt 220 and the pressure roll 211 in the fixing device 200 in the direction of the arrow A, and pressure is applied to the molten unfixed toner image 214. As a result, the unfixed toner image 214 is fixed onto the recording medium 215.

### <Image Forming Apparatus>

An image forming apparatus according to the present exemplary embodiment will be described.

The image forming apparatus according to the present exemplary embodiment includes
an image holder, a charging device that charges a surface of the image holder, an electrostatic latent image forming device that forms an electrostatic latent image on the charged surface of the image holder, a developing device that contains a developer containing a toner and develops the electrostatic latent image formed on the surface of the image holder with the developer to form a toner image, a transfer device that transfers the toner image to a surface of a recording medium, and the fixing device that fixes the toner image to the surface of the recording medium.

As the fixing device, the fixing device according to the present exemplary embodiment is used.

In the image forming apparatus according to the present exemplary embodiment, each of the transfer device and the fixing device may be made into a cartridge such that the transfer device and the fixing device are detachable from an image forming apparatus. That is, the image forming apparatus according to the present exemplary embodiment may include the transfer device according to the present exemplary embodiment and the fixing device according to the present exemplary embodiment respectively, as a device configuring a process cartridge.

Hereinafter, an image forming apparatus according to the present exemplary embodiment will be described with reference to a drawing.

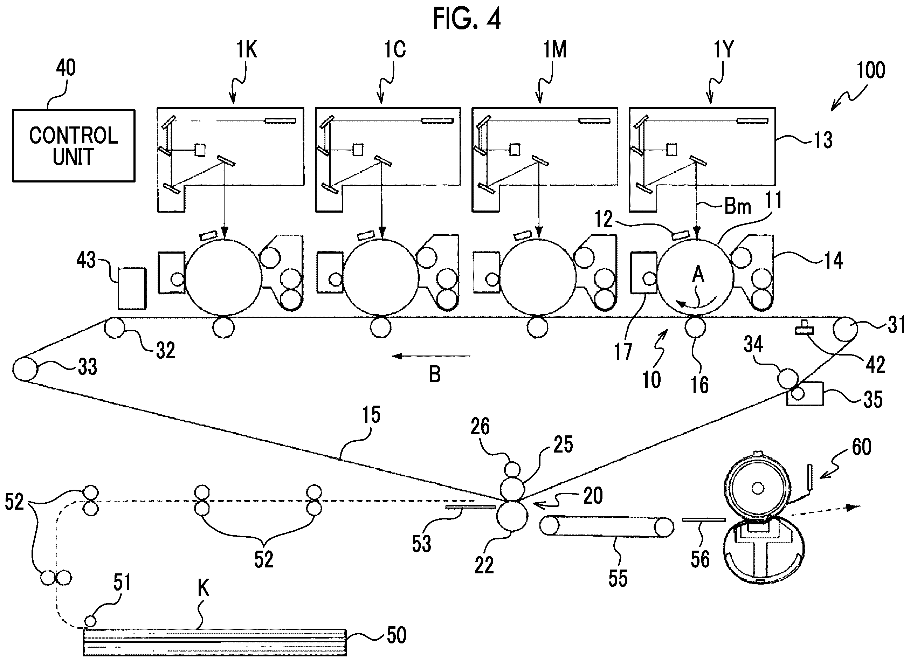

Fig. 4 is a schematic configuration view showing the configuration of the image forming apparatus according to the present exemplary embodiment.

As shown in Fig. 4, an image forming apparatus 100 according to the present exemplary embodiment is, for example, an intermediate transfer-type image forming apparatus that is generally called a tandem type, and includes a plurality of image forming units 1Y, 1M, 1C, and 1K in which a toner image of each color component is formed by an electrophotographic method, a primary transfer portion 10 that performs sequential transfer (primary transfer) of the toner image of each color component formed by each of the image forming units 1Y, 1M, 1C, and 1K to an intermediate transfer belt 15, a secondary transfer portion 20 that performs batch transfer (secondary transfer) of the overlapped toner images transferred to the intermediate transfer belt 15 to paper K as a recording medium, and a fixing device 60 that fixes the images transferred by the secondary transfer on the paper K. The image forming apparatus 100 also has a control unit 40 that controls the operation of each device (each portion).

Each of the image forming units 1Y, 1M, 1C, and 1K of the image forming apparatus 100 includes a photoreceptor 11 that rotates in the direction of an arrow A, as an example of an image holder that holds a toner image formed on the surface.

Around the photoreceptor 11, there are provided a charger 12 for charging the photoreceptor 11 as an example of a charging device and a laser exposure machine 13 for drawing an electrostatic latent image on the photoreceptor 11 as an example of an electrostatic latent image forming device (in the figure, the exposure beam is represented by a mark Bm).

Around the photoreceptor 11, as an example of a developing device, there are provided a developing machine 14 that accommodates toners of each color component and makes the electrostatic latent image on the photoreceptor 11 into a visible image by using the toners and a primary transfer roll 16 that transfers toner images of each color component formed on the photoreceptor 11 to the intermediate transfer belt 15 by the primary transfer portion 10.

Around the photoreceptor 11, there are provided a photoreceptor cleaner 17 that removes the residual toner on the photoreceptor 11 and devices for electrophotography, such as the charger 12, the laser exposure machine 13, the developing machine 14, the primary transfer roll 16, and the photoreceptor cleaner 17, that are disposed in sequence along the rotation direction of the photoreceptor 11. These image forming units 1Y, 1M, 1C, and 1K are substantially linearly arranged in order of yellow (Y), magenta (M), cyan (C), and black (K) from the upstream side of the intermediate transfer belt 15.

The intermediate transfer belt 15 which is an intermediate transfer body is configured with a film-shaped pressure belt including a base layer that is a resin and containing an appropriate amount of an antistatic agent such as carbon black. Then, the intermediate transfer belt 15 is configured to have a volume resistivity of 10⁶ Ωcm or more and 10¹⁴ Ωcm or less and has a thickness of about, for example, 0.1 mm.

By various rolls, the intermediate transfer belt 15 is driven to circulate (rotate) in the direction of an arrow B shown in Fig. 4 at a speed fit for the purpose. The image forming apparatus 100 has, as the various rolls, a driving roll 31 that is driven by a motor (not shown in the drawing) excellent in maintaining a constant speed and rotates the intermediate transfer belt 15, a support roll 32 that supports the intermediate transfer belt 15 substantially linearly extending along the arrangement direction of each photoreceptor 11, a tension applying roll 33 that applies tension to the intermediate transfer belt 15 and functions as a correcting roll preventing meandering of the intermediate transfer belt 15, a back roll 25 that is provided in the secondary transfer portion 20, and a cleaning back roll 34 that is provided in a cleaning portion scrapping off the residual toner on the intermediate transfer belt 15.

The primary transfer portion 10 is configured with the primary transfer roll 16 that is arranged to face the photoreceptor 11 across the intermediate transfer belt 15. The primary transfer roll 16 is configured with a core and a sponge layer as an elastic layer fixed around the core. The core is a cylindrical rod constituted of a metal such as iron or SUS. The sponge layer is a sponge-like cylindrical roll which is formed of blended rubber of NBR, SBR, and EPDM mixed with a conducting agent such as carbon black and has a volume resistivity of 10^{7.5} Ωcm or more and 10^{8.5} Ωcm or less.

The primary transfer roll 16 is arranged to be pressed on the photoreceptor 11 across the intermediate transfer belt 15, and a voltage (primary transfer bias) with a polarity opposite to the charging polarity (negative polarity, the same applies hereinafter) of the toner is applied to the primary transfer roll 16. As a result, the toner image on each photoreceptor 11 is sequentially electrostatically sucked onto the intermediate transfer belt 15, which leads to the formation of overlapped toner images on the intermediate transfer belt 15.

The secondary transfer portion 20 is configured to include the back roll 25 and a secondary transfer roll 22 that is arranged on a toner image-holding surface side of the intermediate transfer belt 15.

The surface of the back roll 25 is configured with a tube of blended rubber of EPDM and NBR in which carbon is dispersed, and the inside of the back roll 25 is configured with EPDM rubber. Then, the back roll 25 is formed such that the surface resistivity thereof is 10⁷ Ω/□ or more and 10¹⁰ Ω/□ or less. The hardness of the back roll 25 is set to, for example, 70° (ASKER C: manufactured by KOBUNSHI KEIKI CO., LTD., the same shall apply hereinafter). The back roll 25 is arranged on the back surface side of the intermediate transfer belt 15 to configure a counter electrode of the secondary transfer roll 22. A power supply roll 26 made of a metal to which secondary transfer bias is stably applied is arranged to come into contact with the back roll 25.

The secondary transfer roll 22 is configured with a core and a sponge layer as an elastic layer fixed around the core. The core is a cylindrical rod constituted of a metal such as iron or SUS. The sponge layer is a sponge-like cylindrical roll which is formed of blended rubber of NBR, SBR, and EPDM mixed with a conducting agent such as carbon black and has a volume resistivity of 10^{7.5} Ωcm or more and 10^{8.5} Ωcm or less.

The secondary transfer roll 22 is arranged to be pressed on the back roll 25 across the intermediate transfer belt 15. The secondary transfer roll 22 is grounded such that the secondary transfer bias is formed between the secondary transfer roll 22 and the back roll 25, which induces secondary transfer of the toner image onto the paper K transported to the secondary transfer portion 20.

On the downstream side of the secondary transfer portion 20 of the intermediate transfer belt 15, an intermediate transfer belt cleaner 35 which removes the residual toner or paper powder on the intermediate transfer belt 15 remaining after the secondary transfer and cleans the surface of the intermediate transfer belt 15 is provided to be separable from the intermediate transfer belt 15.

The intermediate transfer belt 15, the primary transfer portion 10 (primary transfer roll 16), and the secondary transfer portion 20 (secondary transfer roll 22) correspond to an example of the transfer device.

On the other hand, on the upstream side of the yellow image forming unit 1Y, a reference sensor (home position sensor) 42 is disposed which generates a reference signal to be a reference for taking the image forming timing in each of the image forming units 1Y, 1M, 1C, and 1K. The reference sensor 42 recognizes a mark provided on the back side of the intermediate transfer belt 15 and generates a reference signal. Each of the image forming units 1Y, 1M, 1C, and 1K is configured such that these units start to form images according to the instruction from the control unit 40 based on the recognition of the reference signal.

On the downstream side of the black image forming unit 1K, an image density sensor 43 for adjusting image quality is disposed.

The image forming apparatus according to the present exemplary embodiment includes, as a transport device that transports the paper K, a paper storage portion 50 that stores the paper K, a paper feeding roll 51 that takes out and transports the paper K stacked in the paper storage portion 50 at a predetermined timing, a transport roll 52 that transports the paper K transported by the paper feeding roll 51, a transport guide 53 that sends the paper K transported by the transport roll 52 to the secondary transfer portion 20, a transport belt 55 that transports the paper K transported after going through secondary transfer by the secondary transfer roll 22 to the fixing device 60, and a fixing inlet guide 56 that guides the paper K to the fixing device 60.

Next, the basic image forming process of the image forming apparatus according to the present exemplary embodiment will be described.

In the image forming apparatus according to the present exemplary embodiment, image data output from an image reading device not shown in the drawing, a personal computer (PC) not shown in the drawing, or the like is subjected to image processing by an image processing device not shown in the drawing, and then the image forming units 1Y, 1M, 1C, and 1K perform the image forming operation.

In the image processing device, image processing, such as shading correction, misregistration correction, brightness/color space conversion, gamma correction, or various image editing works such as frame erasing or color editing and movement editing, is performed on the input image data. The image data that has been subjected to the image processing is converted into color material gradation data of four colors of yellow (Y), magenta (M), cyan (C), and black (K), and is output to the laser exposure machine 13.

In the laser exposure machine 13, according to the input color material gradation data, for example, the photoreceptor 11 of each of the image forming units 1Y, 1M, 1C, and 1K is irradiated with an exposure beam Bm emitted from a semiconductor laser. The surface of each of the photoreceptors 11 of the image forming units 1Y, 1M, 1C, and 1K is charged by the charger 12 and then scanned and exposed by the laser exposure machine 13. In this way, an electrostatic latent image is formed. By each of the image forming units 1Y, 1M, 1C, and 1K, the formed electrostatic latent image is developed as a toner image of each of the colors of yellow (Y), magenta (M), cyan (C), and black (K).

In the primary transfer portion 10 where each photoreceptor 11 and the intermediate transfer belt 15 come into contact with each other, the toner images formed on the photoreceptors 11 of the image forming units 1Y, 1M, 1C, and 1K are transferred onto the intermediate transfer belt 15. More specifically, in the primary transfer portion 10, by the primary transfer roll 16, a voltage (primary transfer bias) with a polarity opposite to the charging polarity (negative polarity) of the toner is applied to the substrate of the intermediate transfer belt 15, and the toner images are sequentially overlapped on the surface of the intermediate transfer belt 15 and subjected to primary transfer.

After the primary transfer by which the toner images are sequentially transferred to the surface of the intermediate transfer belt 15, the intermediate transfer belt 15 moves, and the toner images are transported to the secondary transfer portion 20. In a case where the toner images are transported to the secondary transfer portion 20, in the transport device, the paper feeding roll 51 rotates in accordance with the timing at which the toner images are transported to the secondary transfer portion 20, and the paper K having the target size is fed from the paper storage portion 50. The paper K fed from the paper feeding roll 51 is transported by the transport roll 52, passes through the transport guide 53, and reaches the secondary transfer portion 20. Before reaching the secondary transfer portion 20, the paper K is temporarily stopped, and a positioning roll (not shown in the drawing) rotates according to the movement timing of the intermediate transfer belt 15 holding the toner images, so that the position of the paper K is aligned with the position of the toner images.

In the secondary transfer portion 20, via the intermediate transfer belt 15, the secondary transfer roll 22 is pressed on the back roll 25. At this time, the paper K transported at the right timing is interposed between the intermediate transfer belt 15 and the secondary transfer roll 22. At this time, in a case where a voltage (secondary transfer bias) with the same polarity as the charging polarity (negative polarity) of the toner is applied from the power supply roll 26, a transfer electric field is formed between the secondary transfer roll 22 and the back roll 25. In the secondary transfer portion 20 pressed by the secondary transfer roll 22 and the back roll 25, the unfixed toner images held on the intermediate transfer belt 15 are electrostatically transferred onto the paper K in a batch.

Thereafter, the paper K to which the toner images are electrostatically transferred is transported in a state of being peeled off from the intermediate transfer belt 15 by the secondary transfer roll 22, and is transported to the transport belt 55 provided on the downstream side of the secondary transfer roll 22 in the paper transport direction. The transport belt 55 transports the paper K to the fixing device 60 according to the optimum transport speed in the fixing device 60. The unfixed toner images on the paper K transported to the fixing device 60 are fixed on the paper K by being subjected to a fixing treatment by heat and pressure by the fixing device 60. Then, the paper K on which a fixed image is formed is transported to an ejected paper-storing portion (not shown in the drawing) provided in an output portion of the image forming apparatus.

Meanwhile, after the transfer to the paper K is finished, the residual toner remaining on the intermediate transfer belt 15 is transported to the cleaning portion as the intermediate transfer belt 15 rotates, and is removed from the intermediate transfer belt 15 by the cleaning back roll 34 and an intermediate transfer belt cleaner 35.

Hitherto, the present exemplary embodiment has been described. However, the present exemplary embodiment is not limited to the above exemplary embodiments, and various modifications, changes, and ameliorations can be added thereto.

### Examples

Hereinafter, the present exemplary embodiment will be described in more detail with reference to examples, but the present exemplary embodiment is not limited to the following examples. In the following description, "parts" means "parts by mass" unless otherwise specified.

### <Example 1>

A polyimide resin (hereinafter, referred to as "PI") substrate formed in an endless belt shape and having a diameter of 168 mm, a width of 400 mm, and a film thickness of 80 µm is prepared.

Next, a predetermined amount of butyl acetate is added to a liquid thermosetting silicone rubber composition (X34-3160A/B, manufactured by Shin-Etsu Chemical Co., Ltd.) so that the content of butyl acetate is 15% by mass, and the mixture is mixed to prepare a coating liquid for forming an elastic layer. The prepared PI substrate is coated with the coating liquid for forming an elastic layer by a blade coating method to have a thickness of 500 µm. Thereafter, the coating layer is heated and dried at 120°C for 30 minutes in a hot air drying furnace to form an elastic layer on the PI substrate.

Next, the surface treatment shown in Table 1 is performed on the surface of the elastic layer (that is, the surface layer forming surface).

Next, a coating liquid having the following composition is applied onto the elastic layer and heated at 120°C for 10 minutes to form a surface layer having a thickness of 30 µm.

The composition of the coating liquid is as follows.
· Polysiloxane compound: "SR-13H" manufactured by Konishi Chemical Ind Co., Ltd., a polysiloxane compound having only a T unit represented by Formula: [R¹SiO_{3/2}]ₘ (in the formula, R¹ = methyl group): 90 parts
· Solvent: butyl acetate: 10 parts

By the above operation, an electrophotographic member is obtained.

### <Examples 2 to 8 and Comparative Example 1>

An electrophotographic member is obtained in the same manner as in Example 1, except that the following items are changed according to Table 1.
· Surface treatment performed on surface of elastic layer (that is, surface layer forming surface)
· Kind of polysiloxane compound

However, in a case where as the polysiloxane compound, SQ3 is used instead of SQ2, the heating condition for the coating film of the coating liquid is set to heating at 170°C for 10 minutes.

In a case where SQ1 is used instead of SQ2 as the polysiloxane compound, the heating treatment of the coating film of the coating liquid is changed to ultraviolet irradiation (irradiation intensity: 15 mW/cm², irradiation time: 1200 seconds).

### <Example 11>

A polyimide resin (hereinafter, referred to as "PI") substrate formed in an endless belt shape and having a diameter of 168 mm, a width of 400 mm, and a film thickness of 80 µm is prepared.

Next, the surface of the PI substrate (that is, the surface layer forming surface) is subjected to the surface treatment shown in Table 1.

Then, a surface layer is formed on the PI substrate in the same manner as in Example 3, thereby obtaining an electrophotographic member.

### <Example 12>

A polyether ether ketone resin (hereinafter, referred to as "PEEK") substrate having a beltless shape, a diameter of 168 mm, a width of 400 mm, and a film thickness of 80 µm is prepared.

Next, the surface of the PEEK substrate (that is, the surface layer forming surface) is subjected to the surface treatment shown in Table 1.

Then, a surface layer is formed on the PI substrate in the same manner as in Example 3, thereby obtaining an electrophotographic member.

### <Example 13>

A electrophotographic member is obtained in the same manner as in Example 3, except that the coating liquid for a surface layer having the following composition is changed as follows according to Table 1.

### -Coating liquid-

· Coating liquid obtained by mixing a polysiloxane compound (SQ1: "OX-SQ-SI20" manufactured by TOAGOSEI CO.,LTD., a polysiloxane compound having T unit represented by the formula: [R¹SiO_{3/2}]ₘ (in the formula, R¹ is a methyl group or an oxetanyl group) and D unit represented by the formula: (R²R³SiO_{2/2})n (in the formula, R² and R³ are a methyl group)) and a silicone resin (KR-255 manufactured by Shin-Etsu Chemical Co., Ltd.) as a binder resin at a ratio of 50% by mass.

### <Surface Treatment>

### (Ultraviolet Irradiation Treatment (1))

· Light source: low pressure mercury lamp "UB2007-2 (manufactured by Sen Engineering Co., Ltd.)" having an ultraviolet wavelength of 184 nm to 254 nm
· Irradiation intensity: 15 mW/cm²
· Irradiation time: 1,300 seconds

### (Ultraviolet Irradiation Treatment (2))

· Light source: low pressure mercury lamp "UB2007-2 (manufactured by Sen Engineering Co., Ltd.)" having an ultraviolet wavelength of 184 nm to 254 nm
· Irradiation intensity: 8 mW/cm²
· Irradiation time: 1,300 seconds

### (Ultraviolet Irradiation Treatment (3))

· Light source: low pressure mercury lamp "UB2007-2 (manufactured by Sen Engineering Co., Ltd.)" having an ultraviolet wavelength of 184 nm to 254 nm
· Irradiation intensity: 15 mW/cm²
· Irradiation time: 1,600 seconds

### (Ultraviolet Irradiation Treatment (4))

· Light source: low pressure mercury lamp "UB2007-2 (manufactured by Sen Engineering Co., Ltd.)" having an ultraviolet wavelength of 184 nm to 254 nm
· Irradiation intensity: 40 mW/cm²
· Irradiation time: 2,000 seconds

### (Ultraviolet Irradiation Treatment (5))

· Light source: low pressure mercury lamp "UB2007-2 (manufactured by Sen Engineering Co., Ltd.)" having an ultraviolet wavelength of 184 nm to 254 nm
· Irradiation intensity: 50 mW/cm²
· Irradiation time: 2,000 seconds

### (Ultraviolet Irradiation Treatment (6))

· Light source: low pressure mercury lamp "UB2007-2 (manufactured by Sen Engineering Co., Ltd.)" having an ultraviolet wavelength of 184 nm to 254 nm
· Irradiation intensity: 6.4 mW/cm²
· Irradiation time: 2,000 seconds

### (Ultraviolet Irradiation Treatment (7))

· Light source: UV-LED lamp "ALE/1.3 (manufactured by KLV Co.,Ltd.)" having an ultraviolet wavelength of 365 nm to 405 nm
· Irradiation intensity: 500 mW/cm²
· Irradiation time: 1,000 seconds

### (Plasma treatment (8))

· Device: "ULD-200 (manufactured by K. BRASCH & CO., LTD.)" · Atmosphere gas: nitrogen
· Gas flow rate: 150 L/min
· Gas pressure: 0.5 MPa
· RF power: 2 kW
· Treatment time: 300 seconds

### <Evaluation of Characteristics>

The following characteristics of the electrophotographic members of each example are measured by the method described above.
· Adhesive strength between surface layer and elastic layer as underlayer
· Surface free energy of surface layer forming surface of elastic layer as underlayer
· Surface free energy of surface of surface layer
· Maximum cross-sectional height Wt of waviness profile of surface of surface layer

### <Evaluation of Peeling of Surface Layer>

Using the electrophotographic member of each example, the degree of peeling of the surface layer is evaluated as follows.

The electrophotographic member of each example is mounted on a fixing device of a printer (Revoria Press PC1120) manufactured by Fujifilm Business Innovation Corp., and the surface of the member after printing on paper (P paper) is visually evaluated.

The evaluation standards are as follows. It is determined that A to C are available.
A: No peeling of the surface layer occurs after 1,000,000 sheets are passed.
B: No peeling of the surface layer occurs after 500,000 sheets are passed, but peeling of the surface layer of less than 1% of the surface area of the member occurs after 1,000,000 sheets are passed.
C: No peeling of the surface layer occurs after 500,000 sheets are passed, but peeling of the surface layer of 1% or more and 10% or less of the surface area of the member occurs after 1,000,000 sheets are passed.
D: Peeling of the surface layer of 10% or more of the surface area of the member occurs while 10,000 sheets or more and 500,000 or less sheets are passed.
E: Peeling of the surface layer of 10% or more of the area of the surface area of the member occurs until 10,000 sheets are passed.

### <Polysiloxane Compound>

The details of the polysiloxane compound used in each example are as follows.
· SQ1: "OX-SQ-SI20" manufactured by Toagosei Co., Ltd., a polysiloxane compound having a T unit represented by [R¹SiO_{3/2}]m, (in the formula, R¹ = methyl group and oxetanyl group) and a D unit represented by (R²R³SiO_{2/2})n (in the formula, R² and R³ = methyl group)
. SQ2: "SR-13H", Konishi Chemical Industry Co., Ltd., a polysiloxane compound having only T unit represented by [R¹SiO_{3/2}]ₘ (in the formula, R¹ = methyl group)
· SQ3: "SR-23", Konishi Chemical Industry Co., Ltd., a polysiloxane compound having only T unit represented by [R¹SiO_{3/2}]ₘ (in the formula, R¹ = phenyl group)

**[Table 1] Examples 1, 2, 4 and 9 are reference examples**

| | Underlayer | | | Surface layer | | Difference in surface free energy between underlayer and surface layer \|A- B\| (mJ/m²) | Adhesive strength between underlayer and surface layer (N/mm) | Waviness Wt of surface layer (µm) | Peeling of surface layer |
|---|---|---|---|---|---|---|---|---|---|
| | Kind | Surface treatment | Surface free energy A (mJ/m²) | Polysiloxane compound | Surface free energy B (mJ/m²) | | | | |
| Example 1 | Silicone rubber elastic layer | Ultraviolet irradiation treatment (1): low pressure mercury lamp (irradiation intensity = 15 mW/cm², irradiation time = 1,300 seconds) | 38 | SQ2 | 28 | 10 | 0.6 | 0.04 | c |
| Example 2 | Silicone rubber elastic layer | Ultraviolet irradiation treatment (1): low pressure mercury lamp (irradiation intensity = 15 mW/cm², irradiation time = 1,300 seconds) | 58 | SQ3 | 27 | 31 | 0.5 | 0.03 | c |
| Example 3 | Silicone rubber elastic layer | Ultraviolet irradiation treatment (1): low pressure mercury lamp (irradiation intensity = 15 mW/cm², irradiation time = 1,300 seconds) | 55 | SQ1 | 26 | 29 | 1.2 | 0.06 | A |
| Example 4 | Silicone rubber elastic layer | Ultraviolet irradiation treatment (2): low pressure mercury lamp (irradiation intensity = 8 mW/cm², irradiation time = 1,300 seconds) | 36 | SQ1 | 26 | 10 | 0.6 | 0.1 | c |
| Example 5 | Silicone rubber elastic layer | Ultraviolet irradiation treatment (3): low pressure mercury lamp (irradiation intensity = 15 mW/cm², irradiation time = 1,600 seconds) | 78 | SQ1 | 26 | 52 | 0.9 | 0.08 | A |
| Example 6 | Silicone rubber elastic layer | Ultraviolet irradiation treatment (4): low pressure mercury lamp (irradiation intensity = 40 mW/cm², irradiation time = 2,000 seconds) | 100 | SQ1 | 26 | 74 | 0.8 | 0.04 | B |
| Example 7 | Silicone rubber elastic layer | Ultraviolet irradiation treatment (5): low pressure mercury lamp (irradiation intensity = 50 mW/cm², irradiation time = 2,000 seconds) | 115 | SQ1 | 26 | 89 | 0.8 | 0.03 | B |
| Example 8 | Silicone rubber elastic layer | Ultraviolet irradiation treatment (6): low pressure mercury lamp (irradiation intensity = 6.4 mW/cm², irradiation time = 2,000 seconds) | 43 | SQ1 | 26 | 17 | 0.8 | 0.05 | B |
| Example 9 | Silicone rubber elastic layer | Ultraviolet irradiation treatment (7): LED lamp (irradiation intensity = 500 mW/cm², irradiation time = 1,000 seconds) | 31 | SQ1 | 26 | 5 | 0.5 | 0.9 | D |
| Example 10 | Silicone rubber elastic layer | Plasma treatment (8) | 75 | SQ1 | 26 | 49 | 1.3 | 0.04 | A |
| Example 11 | PI resin substrate | Ultraviolet irradiation treatment (1): low pressure mercury lamp (irradiation intensity = 15 mW/cm², irradiation time = 1,300 seconds) | 75 | SQ1 | 26 | 49 | 1.1 | 0.03 | A |
| Example 12 | PEEk resin substrate | Ultraviolet irradiation treatment (1): low pressure mercury lamp (irradiation intensity = 15 mW/cm², irradiation time = 1,300 seconds) | 78 | SQ1 | 26 | 52 | 1.2 | 0.04 | A |
| Example 13 | Silicone rubber elastic layer | Ultraviolet irradiation treatment (1): low pressure mercury lamp (irradiation intensity = 15 mW/cm², irradiation time = 1,300 seconds) | 55 | | 30 | 25 | 0.7 | 0.05 | B |
| Comparative Example 1 | Silicone rubber elastic layer | No treatment | 26 | SQ2 | 28 | 2 | 0.2 | 5 | E |

From the above results, it can be seen that, in the present examples, the peeling of the surface layer is suppressed as compared with the comparative examples.

The effects of the appended claims are as follows.

According to appended claim 1, a method of manufacturing an electrophotographic member capable of suppressing peeling of the surface layer is provided as compared with a case of a method of manufacturing an electrophotographic member including forming a surface layer containing a polysiloxane compound having a T unit represented by Formula: [R¹SiO_{3/2}]ₘ on a surface layer forming surface of an underlayer, in which before forming the surface layer, a surface treatment is not performed on the surface layer forming surface of the underlayer or a surface treatment is performed to set the surface free energy to less than 30 mJ/m² or more than 120 mJ/m².

According to appended claim 1, the method of manufacturing an electrophotographic member in which peeling of a surface layer capable of suppressing, compared to a case where the polysiloxane compound has only a T unit represented by Formula: [R¹SiO_{3/2}]ₘ is provided.

According to appended claim 2, the method of manufacturing an electrophotographic member capable of suppressing peeling of the surface layer is provided as compared with a case where the surface free energy of the surface layer forming surface of the underlayer is less than 40 mJ/m² or more than 100 mJ/m².

According to appended claim 3, the method of manufacturing an electrophotographic member capable of suppressing peeling of the surface layer is provided as compared with a case where the difference between the surface free energy of the surface layer forming surface of the underlayer and the surface free energy of the surface of the surface layer is less than 10 mJ/m² or more than 70 mJ/m² in absolute value.

According to appended claim 4, 5, or 6, the method of manufacturing an electrophotographic member capable of easily suppressing peeling of the surface layer by an ultraviolet irradiation treatment or a plasma treatment is provided as compared with a case of a method of manufacturing an electrophotographic member including forming a surface layer containing a polysiloxane compound having a T unit represented by Formula: [R¹SiO_{3/2}]ₘ on a surface layer forming surface of an underlayer, in which before forming the surface layer, a surface treatment is not performed on the surface layer forming surface of the underlayer, or a surface treatment is performed to set the surface free energy to less than 40 mJ/m² or more than 100 mJ/m².

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments are chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

60: fixing device
62: pressure belt
63: belt traveling guide
64: pressing pad
64a: front sandwiching member
64b: peeling sandwiching member
65: holding member
66: halogen lamp
67: lubricant supply device
68: sliding member
69: thermosensitive element
70: peeling member
71: peeling claw
72: holding member
80: fixing device
82: sliding member
84: heating belt
86: fixing belt module
88: pressure roll
89A: halogen heater
89: heating and pressing roll
90A: halogen heater
90: support roll
92A: halogen heater
92: support roll
94: posture correction roll
96: support member
98: support roll
100: image forming apparatus
200: fixing device
211: pressure roll
212: electromagnetic induction heating device
66: halogen lamp
67: lubricant supply device
68: sliding member
69: thermosensitive element
70: peeling member
71: peeling claw
72: holding member
80: fixing device
82: sliding member
84: heating belt
86: fixing belt module
88: pressure roll
89A: halogen heater
89: heating and pressing roll
90A: halogen heater
90: support roll
92A: halogen heater
92: support roll
94: posture correction roll
96: support member
98: support roll
100: image forming apparatus
200: fixing device
211: pressure roll
212: electromagnetic induction heating device

## Claims

1. A method of manufacturing an electrophotographic member, the method comprising:
performing a surface treatment on a surface layer forming surface of an underlayer; and
forming a surface layer containing a polysiloxane compound having a T unit represented by Formula: [R¹SiO_{3/2}]ₘ (here, in the formula, R¹ represents an organic group, m represents an integer of 2 or more, and at least one R¹ among a plurality of R¹'s present in the T unit is a group including at least one of an alkyl group or an aryl group) , and a D unit represented by Formula: [R²R³SiO_{2/2}]ₙ (here, in the formula, R² and R³ represent an organic group, and n represents an integer of 2 or more) on the surface layer forming surface of the underlayer, wherein
the method of manufacturing the electrophotographic member is being **characterized in that**:
the surface treatment is performed to set a surface free energy of the surface layer forming surface of the underlayer to 40 mJ/m² or more and 120 mJ/m² or less, and the surface free energy is measured in accordance with a Owens-Wendt-Rabel-Kaelble method.

2. The method of manufacturing an electrophotographic member according to claim 1,
wherein in the first step, the surface free energy of the surface layer forming surface of the underlayer is set to 40 mJ/m² or more and 100 mJ/m² or less.

3. The method of manufacturing an electrophotographic member according to claim 1,
wherein a difference between the surface free energy of the surface layer forming surface of the underlayer and a surface free energy of a surface of the surface layer is 10 mJ/m² or more and 70 mJ/m² or less in absolute value.

4. The method of manufacturing an electrophotographic member according to any one of claims 1 to 2,
wherein in the first step, the surface treatment is an ultraviolet irradiation treatment.

5. The method of manufacturing an electrophotographic member according to claim 4,
wherein a wavelength of ultraviolet light to be applied in the ultraviolet irradiation treatment is 300 nm or less.

6. The method of manufacturing an electrophotographic member according to any one of claims 1 to 3,
wherein in the first step, the surface treatment is a plasma treatment.

7. The method of manufacturing an electrophotographic member according to claim 5,
wherein the ultraviolet irradiation treatment is performed at an irradiation intensity of 10 mW/cm² or more and for an irradiation time of 100 seconds or more.

## Patentansprüche

1. Verfahren des Herstellens eines elektrophotographischen Elements, wobei das Verfahren umfasst:
Durchführen einer Oberflächenbehandlung an einer Oberflächenschicht bildenden Fläche einer Unterschicht; und
Bilden einer Oberflächenschicht, die eine Polysiloxanverbindung mit einer T-Einheit, die durch Formel: [R¹SiO_{3/2}]ₘ (hier stellt in der Formel R¹ eine organische Gruppe dar, m stellt eine ganze Zahl von 2 oder mehr dar, und mindestens ein R¹ unter mehreren R¹, die in der T-Einheit vorhanden sind, ist eine Gruppe, die mindestens eine von einer Alkylgruppe und einer Arylgruppe enthält) dargestellt wird, und einer D-Einheit, die durch Formel: [R²R³SiO_{2/2}]ₙ (hier stellen in der Formel R² und R³ eine organische Gruppe dar, und n stellt eine ganze Zahl von 2 oder mehr dar) dargestellt wird, auf der Oberflächenschicht bildenden Fläche der Unterschicht enthält, wobei
wobei das Verfahren des Herstellens des elektrophotographischen Elements **dadurch gekennzeichnet ist, dass**:
die Oberflächenbehandlung durchgeführt wird, um eine freie Oberflächenenergie der Oberflächenschicht bildenden Fläche der Unterschicht auf 40 mJ/m² oder mehr und 120 mJ/m² oder weniger einzustellen, und die freie Oberflächenenergie in Übereinstimmung mit einem Owens-Wendt-Rabel-Kaelble-Verfahren gemessen wird.

2. Verfahren des Herstellens eines elektrophotographischen Elements nach Anspruch 1, wobei bei dem ersten Schritt die freie Oberflächenenergie der Oberflächenschicht bildenden Fläche der Unterschicht auf 40 mJ/m² oder mehr und 100 mJ/m² oder weniger eingestellt wird.

3. Verfahren des Herstellens eines elektrophotographischen Elements nach Anspruch 1,
wobei ein Unterschied zwischen der freien Oberflächenenergie der Oberflächenschicht bildenden Fläche der Unterschicht und einer freien Oberflächenenergie einer Fläche der Oberflächenschicht 10 mJ/m² oder mehr und 70 mJ/m² oder weniger in Absolutwert beträgt.

4. Verfahren des Herstellens eines elektrophotographischen Elements nach einem der Ansprüche 1 bis 2,
wobei bei dem ersten Schritt die Oberflächenbehandlung eine Ultraviolett-Bestrahlungsbehandlung ist.

5. Verfahren des Herstellens eines elektrophotographischen Elements nach Anspruch 4,
wobei eine Wellenlänge von Ultraviolettlicht, das bei der Ultraviolett-Bestrahlungsbehandlung anzuwenden ist, 300 nm oder weniger beträgt.

6. Verfahren des Herstellens eines elektrophotographischen Elements nach einem der Ansprüche 1 bis 3,
wobei bei dem ersten Schritt die Oberflächenbehandlung eine Plasmabehandlung ist.

7. Verfahren des Herstellens eines elektrophotographischen Elements nach Anspruch 5,
wobei die Ultraviolett-Bestrahlungsbehandlung bei einer Bestrahlungsintensität von 10 mW/cm² oder mehr und für eine Bestrahlungszeit von 100 Sekunden oder länger durchgeführt wird.

## Revendications

1. Procédé de fabrication d'un élément électrophotographique, le procédé comprenant :
effectuer un traitement de surface sur une surface de formation de couche de surface d'une sous-couche ; et
former, sur la surface de formation de couche de surface de la sous-couche, une couche de surface contenant un composé polysiloxane ayant une unité T représentée par la formule : [R¹SiO_{3/2}]ₘ (ici, dans la formule, R¹ représente un groupe organique, m représente un entier de 2 ou plus, et au moins un R¹ parmi une pluralité de R¹ présents dans l'unité T est un groupe incluant au moins l'un d'un groupe alkyle ou d'un groupe aryle), et une unité D représentée par la formule : [R²R³SiO_{2/2}]ₙ (ici, dans la formule,
R² et R³ représentent un groupe organique, et n représente un entier de 2 ou plus), dans lequel
le procédé de fabrication de l'élément électrophotographique est **caractérisé en ce que** :
le traitement de surface est effectué pour régler une énergie libre de surface de la surface de formation de couche de surface de la sous-couche à 40 mJ/m² ou plus et 120 mJ/m² ou moins, et l'énergie libre de surface est mesurée conformément à une méthode Owens-Wendt-Rabel-Kaelble.

2. Procédé de fabrication d'un élément électrophotographique selon la revendication 1, dans lequel dans la première étape, l'énergie libre de surface de la surface de formation de couche de surface de la sous-couche est réglée à 40 mJ/m² ou plus et 100 mJ/m² ou moins.

3. Procédé de fabrication d'un élément électrophotographique selon la revendication 1,
dans lequel une différence entre l'énergie libre de surface de la surface de formation de couche de surface de la sous-couche et une énergie libre de surface d'une surface de la couche de surface est de 10 mJ/m² ou plus et de 70 mJ/m² ou moins en valeur absolue.

4. Procédé de fabrication d'un élément électrophotographique selon l'une quelconque des revendications 1 à 2,
dans lequel dans la première étape, le traitement de surface est un traitement par irradiation ultraviolette.

5. Procédé de fabrication d'un élément électrophotographique selon la revendication 4,
dans lequel une longueur d'onde de lumière ultraviolette à appliquer dans le traitement par irradiation ultraviolette est de 300 nm ou moins.

6. Procédé de fabrication d'un élément électrophotographique selon l'une quelconque des revendications 1 à 3,
dans lequel dans la première étape, le traitement de surface est un traitement par plasma.

7. Procédé de fabrication d'un élément électrophotographique selon la revendication 5,
dans lequel le traitement par irradiation ultraviolette est effectué à une intensité d'irradiation de 10 mW/cm² ou plus et pendant une durée d'irradiation de 100 secondes ou plus.
